(19) Europäisches Patentamt
European Patent Office
Office européen des brevets

(11) **EP 4 576 763 A1**

(12) **EUROPEAN PATENT APPLICATION**
published in accordance with Art. 153(4) EPC

(43) Date of publication:
**25.06.2025 Bulletin 2025/26**

(21) Application number: **23853851.6**

(22) Date of filing: **10.03.2023**

(51) International Patent Classification (IPC):
**H04N 9/31** $^{(2006.01)}$

(52) Cooperative Patent Classification (CPC):
**H04N 9/31**

(86) International application number:
**PCT/CN2023/080875**

(87) International publication number:
**WO 2024/036934 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 CN 202210983624**

(71) Applicant: **Beijing Roborock Innovation Technology Co., Ltd.**
**Beijing 102206 (CN)**

(72) Inventors:
• **YANG, Guangzhen**
**Beijing 102206 (CN)**
• **WU, Erqi**
**Beijing 102206 (CN)**

(74) Representative: **Winter, Brandl - Partnerschaft mbB**
**Alois-Steinecker-Straße 22**
**85354 Freising (DE)**

(54) **PROJECTED IMAGE DEFORMATION CORRECTION RESULT EVALUATION METHOD AND APPARATUS, DEVICE, AND MEDIUM**

(57) A projected image deformation correction result evaluation method and apparatus, a device, and a storage medium. The method comprises: obtaining corner point coordinates of a projected image, wherein the projected image is a quadrilateral, and the corner point coordinates are coordinates corresponding to four corners of the quadrilateral in a rectangular coordinate system; obtaining four included angles between four sides of the projected image and the corresponding sides of an absolute rectangle, wherein the absolute rectangle refers to that one group of opposite sides in the four sides of the rectangle is parallel to the X-axis in the rectangular coordinate system, the other group of opposite sides is parallel to the Y-axis in the rectangular coordinate system, the X-axis is the horizontal direction, and the Y-axis is the vertical direction; determining values of the four included angles on the basis of the corner point coordinates; and evaluating a correction result of the projected image on the basis of the values of the four included angles.

| |
|---|
| Collecting a projected picture and obtaining angle point coordinates of the projected picture — S201 |
| Obtaining four included angles between four sides of the projected picture and corresponding sides of an absolute horizontal rectangle — S203 |
| Determining values of the four included angles based on the angle point coordinates — S205 |
| Evaluating a correction result of the projected picture based on the values of the four included angles — S207 |

**FIG. 2**

EP 4 576 763 A1

# EP 4 576 763 A1

**Description**

## CROSS-REFERENCE TO RELATED APPLICATION

The present application claims priority to Chinese Patent Application No. 202210983624.4, filed on August 16, 2022, the entire content of which is incorporated herein by reference.

## TECHNICAL FIELD

The present disclosure relates to the field of projection technologies, in particular to an evaluating method and apparatus for a distortion correction result of a projected picture, a device and a medium.

## BACKGROUND ART

Household portable projectors have been welcomed by more and more people due to their advantages such as ease of installation and portability. This is primarily attributed from the development of a trapezoidal correction technology. Through the trapezoidal correction technology, a projector can project a picture onto a projection plane basically in an orthographic manner without having to be placed directly facing the projection plane.

In the related art, there are some trapezoidal correction solutions that can achieve the trapezoidal correction of a projected picture, but no unified standard is proposed to evaluate the trapezoidal correction result yet, which brings low correction efficiency, difficulty in determining the correction accuracy, and other problems in a trapezoidal correction process.

## SUMMARY OF THE DISCLOSURE

In view of this, embodiments of the present disclosure provide an evaluating method and apparatus for a distortion correction result of a projected picture, a device and a medium, which are intended to solve a technical problem that a trapezoidal correction result is difficult to evaluate.

In a first aspect, an embodiment of the present disclosure provides an evaluating method for a distortion correction result of a projected picture. The method includes:

obtaining angle point coordinates of the projected picture, wherein the projected picture is a quadrangle, and the angle point coordinates are coordinates corresponding to four angle points of the quadrangle in a Cartesian coordinate system;

obtaining four included angles between four sides of the projected picture and corresponding sides of an absolute rectangle, wherein one group of opposite sides among the four sides of the absolute rectangle are parallel to an X axis in the Cartesian coordinate system, the other group of opposite sides are parallel to a Y axis in the Cartesian coordinate system, the X axis is in a horizontal direction, and the Y axis is in a vertical direction;

determining values of the four included angles based on the angle point coordinates; and

evaluating a correction result of the projected picture based on the values of the four included angles.

In a second aspect, an embodiment of the present disclosure further provides an evaluating apparatus for a distortion correction result of a projected picture. The apparatus includes:

a collecting unit, configured to obtain angle point coordinates of the projected picture, wherein the projected picture is a quadrangle, and the angle point coordinates are coordinates corresponding to four angle points of the quadrangle in a Cartesian coordinate system;

an obtaining unit, configured to obtain four included angles between four sides of the projected picture and corresponding sides of an absolute rectangle, wherein one group of opposite sides among the four sides of the absolute rectangle are parallel to an X axis in the Cartesian coordinate system, the other group of opposite sides are parallel to a Y axis in the Cartesian coordinate system, the X axis is in a horizontal direction, and the Y axis is in a vertical direction;

a determining unit, configured to determine values of the four included angles based on the angle point coordinates; and

an evaluating unit, configured to evaluate a correction result of the projected picture based on the values of the four included angles.

In a third aspect, an embodiment of the present disclosure further provides a projection device. The projection device includes a control unit and a projection unit, wherein the control unit is configured to control the projection unit to execute a projection instruction and evaluate a distortion correction result of a projected picture through the steps of the method described in any of the above items.

In a fourth aspect, an embodiment of the present disclosure further provides a projection device. The projection device includes a control unit and any of the above evaluating apparatuses, wherein the control unit is configured to control the evaluating apparatus to evaluate a distortion correction result of a projected picture.

In a fifth aspect, an embodiment of the present disclosure further provides an electronic device. The electronic device includes a processor and a memory, wherein the memory stores computer program instructions executable by the processor, and the processor, executing the computer program instructions, implements the steps of the method described in any of the above items.

In a sixth aspect, an embodiment of the present disclosure further provides a non-transient computer-readable storage medium storing computer program instructions therein, wherein when the computer program instructions are invoked and executed by a processor, the steps of the method described in any of the above items are implemented.

## BRIEF DESCRIPTION OF THE DRAWINGS

To describe the technical solutions in the embodiments or the related art of the present disclosure more clearly, the following briefly introduces the accompanying drawings required for describing the embodiments or the related art. Apparently, the accompanying drawings in the following description show merely some embodiments of the present disclosure, and a person of ordinary skill in the art may still derive other accompanying drawings from these accompanying drawings without creative efforts.

FIG. 1 is a schematic diagram of a projection state of a projection device provided by an embodiment of the present disclosure;

FIG. 2 is a flowchart of an evaluating method for a correction result provided by an embodiment of the present disclosure;

FIG. 3 is a schematic diagram of a projected picture of a projection device provided by an embodiment of the present disclosure;

FIG. 4 is a flowchart of an evaluating method for a correction result provided by another embodiment of the present disclosure;

FIG. 5 is a schematic diagram of quadrant construction for a projected picture provided by an embodiment of the present disclosure;

FIG. 6 is a schematic diagram of a projected picture in different states provided by an embodiment of the present disclosure;

FIG. 7 is a schematic diagram of coordinates of a projected image provided by another embodiment of the present disclosure;

FIG. 8 is a flowchart of an evaluating method for a correction result provided by another embodiment of the present disclosure;

FIG. 9 is a flowchart of an evaluating method for a correction result provided by another embodiment of the present disclosure;

FIG. 10 is a flowchart of an evaluating method for a correction result provided by another embodiment of the present disclosure;

FIG. 11 is a flowchart of an evaluating method for a correction result provided by another embodiment of the present disclosure;

FIG. 12 is a flowchart of an evaluating method for a correction result provided by another embodiment of the present disclosure;

FIG. 13 is a schematic structural diagram of an evaluating apparatus for a correction result provided by an embodiment of the present disclosure;

FIG. 14 is a schematic structural diagram of a projection device provided by an embodiment of the present disclosure; and

FIG. 15 is a schematic structural diagram of an electronic device provided by an embodiment of the present disclosure.

## DETAILED DESCRIPTION

To make the objectives, technical solutions and advantages of the present disclosure clearer, the present disclosure will be further described in detail below with reference to the accompanying drawings. It is obvious that the described embodiments are only some, but not all of the embodiments of the present disclosure. All other embodiments obtained by those of ordinary skills in the art without creative efforts based on the embodiments in the present disclosure are within the protection scope of the present disclosure.

The terms used in the embodiments of the present disclosure are for the purpose of describing particular embodiments only and are not intended to limit the present disclosure. The singular forms "a/an", "said" and "the" used in the embodiments of the present disclosure and the appended claims are intended to include the plural forms as well, unless otherwise indicated clearly in the context. The term "a plurality of" generally includes at least two.

It is to be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" herein generally indicates an "or" relationship between the contextual objects.

It is also to be noted that, the terms "including", "containing", or any other variants are intended to cover the nonexclusive inclusion, such that a commodity or apparatus including a series of elements includes not only those elements, but also other elements not listed explicitly or elements inherent to such a commodity or apparatus. Without more limitations, the element defined by the phrase "including a ..." does not exclude the existence of other same elements in the commodity or apparatus including the element.

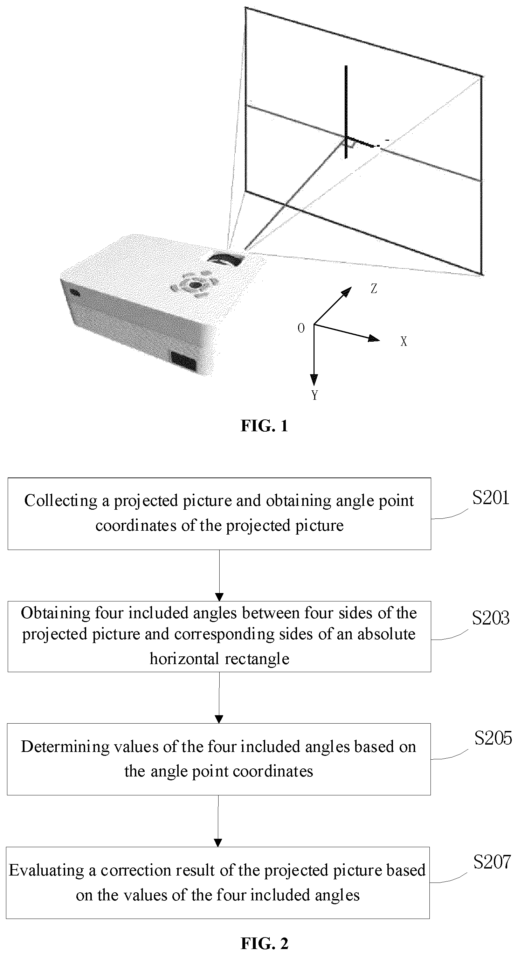

As shown in FIG. 1, a projector projects a projected image onto a projection plane, such as a wall or curtain, and then, a non-absolute rectangular projection is adjusted to an absolute rectangle for a user to view through a trapezoidal correction method. A three-dimensional Cartesian coordinate system shown in FIG. 1 is defined as follows: the projector is taken as an origin, a projection direction of the projector is taken as a Z-axis direction, a horizontally rightward direction of the projector is taken as an X-axis direction, and a direction perpendicular to an XZ plane and downward is taken as a Y-axis direction. The absolute rectangle refers to a rectangle where one group of opposite sides among four sides of the rectangle are parallel to an X axis of the Cartesian coordinate system, and the other group of opposite sides are parallel to a Y axis of the Cartesian coordinate system, wherein the X axis is in a horizontal direction, and the Y axis is in a vertical direction. The trapezoidal correction mainly functions to correct a trapezoidal distortion of a picture generated by a projector during projection. During using the projector, the user does not need to spend a long time adjusting a projection angle of the projector. Instead, the user only needs to simply place the projector, and the trapezoidal distortion can be repaired by means of a trapezoidal correction function of the projector, which brings great convenience for the user to use the projector.

Conventional trapezoidal correction technologies are relatively complex, and the user has to perform multiple steps of adjustment to obtain a projected image of an absolute rectangle. In addition, there is no perfect and simple evaluation solution for the trapezoidal correction effect among related technologies. Most of the related technologies are to evaluate the rectangularity, e.g., evaluate the rectangularity through four inner angles of the rectangle. However, these technologies cannot process a projected picture where the projector and the horizontal plane only have a roll angle, that is, the trapezoidal correction result is an oblique rectangle. Such pictures subjected to trapezoidal correction meet evaluation standards for rectangularity, but cannot achieve the purpose of comprehensive evaluation for trapezoidal correction, because the purpose of trapezoidal correction is to allow the projector to produce a horizontal rectangular projection for the user to view normally.

The related technologies can only determine whether a picture is a rectangle by means of a shot picture, and their essence is to determine whether a projected image is a rectangle by means of four sides or four vertex angles of the picture. The above-mentioned determination process cannot identify whether the projected picture is a horizontal rectangle, cannot identify which placement angle of the projector causes the tilt of the quadrangle, either, and thus cannot guide a trapezoidal correction algorithm to quickly correct the picture.

To solve the above problems, an embodiment of the present disclosure provides a comprehensive evaluating method for a distortion correction result of a projected picture. The method includes: obtaining angle point coordinates of the projected picture first, wherein the projected picture is a quadrangle, and the angle point coordinates are angle point coordinates of the quadrangle in a Cartesian coordinate system; then, obtaining four included angles between four sides of the projected picture and corresponding sides of an absolute rectangle; and finally, evaluating a correction result of the projected picture based on the four included angles.

The evaluating method for the distortion correction result of the projected picture provided by this embodiment of the present disclosure provides a more comprehensive and simple trapezoidal correction evaluation standard. According to the four included angles between four sides of the projected picture and corresponding sides of the absolute rectangle, this standard can evaluate both the rectangularity and the levelness, thereby improving the evaluation efficiency and accuracy. This standard is simple in calculation, and can evaluate and analyze the trapezoidal correction result more comprehensively. In this embodiment of the present disclosure, a qualitative and quantitative relationship between evaluation parameters and trapezoidal correction parameters is also established. This relationship can assist in quickly locating problems existing in trapezoidal correction. This embodiment of the present disclosure also provides evaluation standard parameters of a trapezoidal calibration algorithm, wherein a trapezoidal correction result can be directly evaluated by using a single evaluation standard parameter, thereby greatly facilitating the development and optimization of the trapezoidal correction algorithm. This embodiment of the present disclosure does not involve too many evaluation parameters, enabling the evaluation process to be more concise and the evaluation results to be more readable.

As shown in FIG. 2, an embodiment of the present disclosure provides an evaluating method for a distortion correction result of a projected picture. The method includes the following steps.

In S201, angle point coordinates of the projected picture are obtained, wherein the projected picture is a quadrangle, and the angle point coordinates are coordinates corresponding to four angle points of the quadrangle in a Cartesian coordinate system.

In S203, four included angles between four sides of the projected picture and corresponding sides of an absolute rectangle are obtained, wherein the absolute rectangle refers to a rectangle where one group of opposite sides among the four sides of the rectangle are parallel to an X axis of the Cartesian coordinate system, the other group of opposite sides thereof are parallel to a Y axis of the Cartesian coordinate system, the X axis is in a horizontal direction, and the Y axis is in a vertical direction.

In S205, values of the four included angles are determined based on the angle point coordinates.

In S207, a correction result of the projected picture is evaluated based on the values of the four included angles.

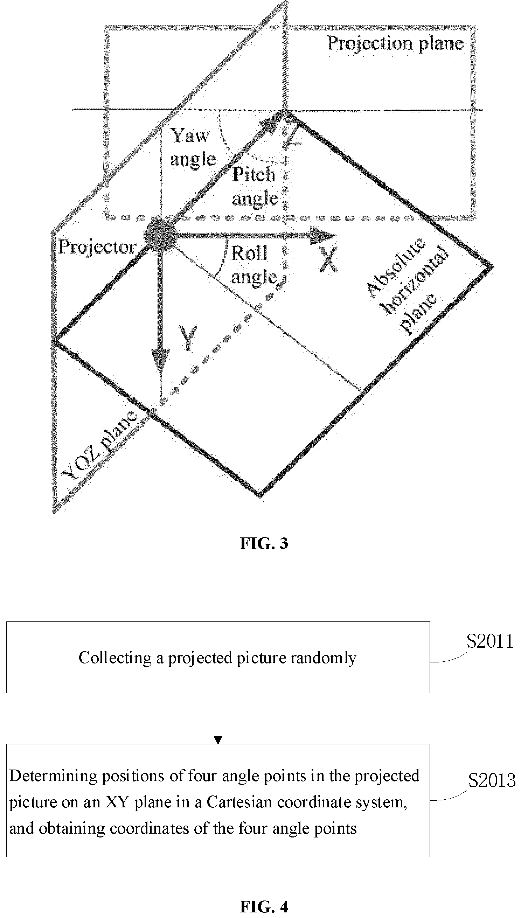

As shown in FIG. 3, a solid dot represents the projector, a projection optical axis direction of the projector is a Z-axis direction, an X axis of the projector is defined as a horizontally rightward direction, and a Y axis of the projector is vertically downward and orthogonal to X and Z. An origin O of the coordinate system is defined at the center of opto-mechanical hardware of the projector, which is simplified to take the projector as the origin O. For the sake of clarity, it is defined that when facing the projection plane, a left-hand direction is a left direction, a right-hand direction is a right direction, a gravity direction is a down direction, and a direction opposite to the gravity direction is an up direction. In general cases, a yaw angle, a pitch angle and a roll angle of the projected picture need to be corrected during the trapezoidal correction process. The pitch angle represents an included angle between the optical axis of the projector and a projection plane in a YOZ plane, the yaw angle represents an included angle between the optical axis of the projector and the projection plane in an XOZ plane. The roll angle represents an included angle between the X axis of the projector and an absolute horizontal plane which refers to a horizontal plane perpendicular to the gravity direction. In general cases, the pitch angle and the yaw angle that need to be corrected by the projector may be calculated by sensing the projection plane, and the roll angle of the projector may be calculated by an accelerometer, etc. The purpose of trapezoidal correction is to correct these three angles. Therefore, in the event of evaluating the trapezoidal correction effect, the influences of the three angles need to be considered simultaneously.

In S201, the projector projects the picture onto the projection plane, such as a wall or a curtain. The projected picture is obtained by means of a photographing module having a function other than a projection function of the projector, e.g., a photographing module integrated on a projector housing, or an independent non-integrated photographing module; and the angle point coordinates of the projected picture are obtained. The projected picture is a quadrangle formed by projecting the picture onto the projection plane, and the angle point coordinates are angle point coordinates of the quadrangle in the Cartesian coordinate system.

The obtaining the angle point coordinates of the projected picture includes the following substeps, as shown in FIG. 4.

In S2011, any projected picture is collected randomly.

The projected picture is obtained by means of the photographing module having a function other than the projection function of the projector, e.g., the photographing module integrated on the projector housing, or the independent non-integrated photographing module. This picture is collected in order to obtain angle point coordinate values required for the construction of the following evaluating method. Optionally, deviation angles of the sides of the quadrangle relative to corresponding sides of the absolute rectangle may be obtained by shooting the picture, and then subsequent evaluation parameters can be obtained. The absolute rectangle refers to the projected rectangle with upper and lower sides in a horizontal direction (parallel to the X axis), and left and right sides in a vertical (upright) direction (parallel to the Y axis). The absolute rectangle is an ideal target state (i.e., a standard shape) for trapezoidal correction.

In S2013, positions of four angle points P1, P2, P3, and P4 of the projected picture in the Cartesian coordinate system are determined, and coordinates of the four angle points P1, P2, P3, and P4 are obtained, denoted as $P1(P1_X, P1_Y)$, $P2(P2_X, P2_Y)$, $P3(P3_X, P3_Y)$, and $P4(P4_X, P4_Y)$.

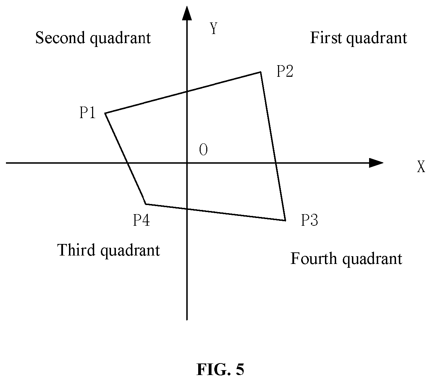

An XY Cartesian coordinate system is constructed on the projection plane, with a horizontally rightward direction being an X-axis positive direction and a vertically upward direction being a Y-axis positive direction. As shown in FIG. 5, the projection plane coordinate system may be subjected to coordinate transformation with the three-dimensional Cartesian coordinate system constructed in FIG. 1 which takes the projector as the origin. A coordinate origin O of the Cartesian coordinate system may be located at any position of the projected picture, e.g., may be located at any angle point of the quadrilateral projected picture, or in the middle (e.g., the center) of the quadrilateral projected picture, or on any side of the quadrilateral projected picture.

The following implementation proposes a calculation method in the case that the coordinate origin is located in the middle of the quadrilateral projected picture. Other implementations will be omitted.

In S2013-1, four quadrants of the projected picture in the Cartesian coordinate system are constructed, denoted as a first quadrant, a second quadrant, a third quadrant and a fourth quadrant, wherein the four angle points of the quadrangle are located in the four quadrants, respectively.

As shown in FIG. 5, four quadrants of the projected picture in the Cartesian coordinate system are constructed. An X-axis positive direction and a Y-axis positive direction are denoted as the first quadrant. An X-axis negative direction and a Y-axis positive direction are denoted as the second quadrant. An X-axis negative direction and a Y-axis negative direction are denoted as the third quadrant. An X-axis positive direction and a Y-axis negative direction are denoted as the fourth quadrant. The four angle points (P1, P2, P3, and P4) of the quadrangle are located in the four quadrants, respectively.

In S2013-2, the four angle points on the second quadrant, the first quadrant, the fourth quadrant and the third quadrant are denoted as P1, P2, P3, and P4, respectively.

In S2013-3, coordinates $P1(P1_X, P1_Y)$, $P2(P2_X, P2_Y)$, $P3(P3_X, P3_Y)$, and $P4(P4_X, P4_Y)$ of the four angle points P1, P2, P3, and P4 are obtained.

Due to the construction of the above four quadrants and the positions of the four angle points, coordinate parameters of the four angle points can be obtained conveniently, so that the parameters of the four included angles can be obtained conveniently by calculation in the subsequent steps, thereby accurately constructing the qualitative and quantitative relationship between the evaluation parameters and the trapezoidal correction parameters, and further assisting in quickly identifying the problems existing in the trapezoidal correction. Meanwhile, it is convenient to provide the evaluation parameters of the trapezoidal calibration algorithm.

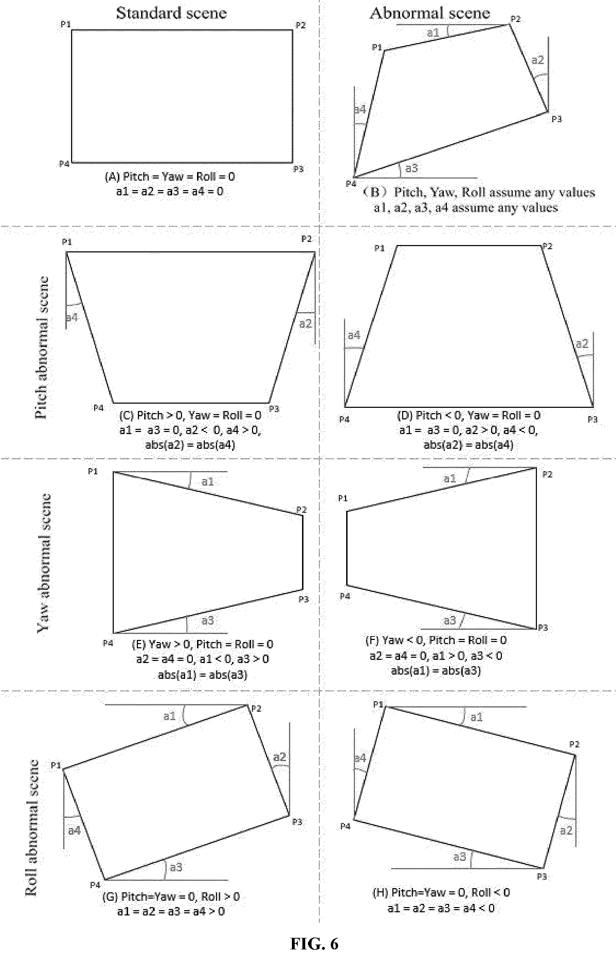

Theoretically, the rectangle subjected to trapezoidal correction should be an absolute rectangle with upper and lower sides parallel to the absolute horizontal plane, as shown in Part (A) in FIG. 6. However, in practice, due to the accumulation of various errors, an irregular quadrangle is generally obtained first in the projection process, as shown in Part (B) in FIG. 6. In order to facilitate the evaluation of the rectangle correction effect, the influences of Pitch, Yaw and roll on the correction result are fully considered, and four parameters related to the pitch angle, the yaw angle and the roll angle are constructed, which respectively represent the included angles between four sides of the corrected quadrangle and the sides of the absolute horizontal rectangle, thereby simply characterizing the correction evaluation effect of the quadrangle.

Specifically, in S203, the four included angles between the four sides of the projected picture and the corresponding sides of the absolute rectangle may be obtained by the following method, as shown in FIG. 6. In some embodiments, the values of the four included angles are denoted as $\alpha_1, \alpha_2, \alpha_3, \alpha_4$, respectively, wherein $\alpha_1$ is an included angle between the upper side of the quadrangle and the horizontal direction; $\alpha_3$ is an included angle between the lower side of the quadrangle and the horizontal direction; $\alpha_2$ is an included angle between the right side of the quadrangle and the vertical direction; and $\alpha_4$ is an included angle between the left side of the quadrangle and the vertical direction.

In S205, the method for determining the values of the four included angles based on the angle point coordinates is as follows.

The four included angles $\alpha_1, \alpha_2, \alpha_3, \alpha_4$ satisfy the following relationship:

$$\alpha_1 = \arctan\left(\frac{P2_y - P1_y}{P2_x - P1_x}\right)$$

$$\alpha_2 = \arctan\left(\frac{P3_x - P2_x}{P2_y - P3_y}\right)$$

$$\alpha_3 = \arctan\left(\frac{P4_y - P3_y}{P4_x - P3_x}\right)$$

$$\alpha_4 = \arctan\left(\frac{P4_x - P1_x}{P1_y - P4_y}\right),$$

wherein the $P1_x$, $P1_y$, $P2_x$, $P2_y$, $P3_x$, $P3_y$, $P4_x$, and P4y represent angle point coordinates of the four angle points P1, P2, P3, and P4 of the quadrangle, respectively. In addition, the four included angles $\alpha_1, \alpha_2, \alpha_3, \alpha_4$ satisfy the following relationship:

$$\alpha_1, \alpha_2, \alpha_3, \alpha_4 \in \left( -\frac{\pi}{2}, \frac{\pi}{2} \right)$$.

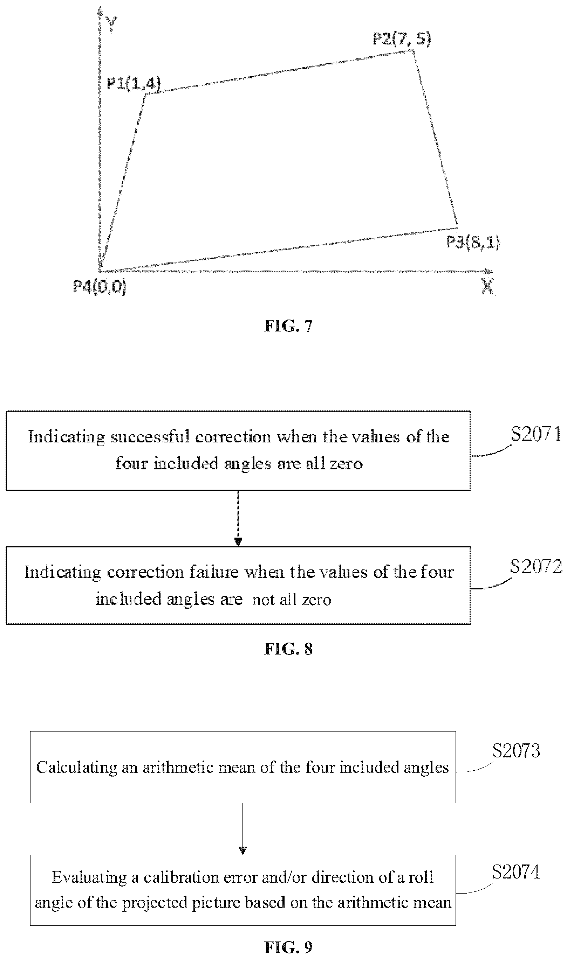

As shown in FIG. 7, the angle point coordinates of the four angle points P1, P2, P3, and P4 of the quadrangle are given, and a specific process for calculating the four included angles $\alpha_1, \alpha_2, \alpha_3, \alpha_4$ is given below, to be specific:

$$\alpha_1 = \arctan\left( \frac{5-4}{7-1} \right) = 9.5$$

$$\alpha_2 = \arctan\left( \frac{8-7}{5-1} \right) = 14.0$$

$$\alpha_3 = \arctan\left( \frac{0-1}{0-8} \right) = 7.1$$

$$\alpha_4 = \arctan\left( \frac{0-1}{4-0} \right) = -14.0$$.

Due to the construction of the above four included angles $\alpha_1, \alpha_2, \alpha_3, \alpha_4$, a general shape of the current quadrangle can be determined conveniently according to whether the four included angles $\alpha_1, \alpha_2, \alpha_3, \alpha_4$ are positive or negative values, and/or are equal, and/or are zero, thereby further assisting in quickly identifying the problems existing in trapezoidal correction. The evaluation process is more concise and the results are more readable.

In S207, the correction result may be evaluated by means of a plurality of implementations. For example, in some embodiments, the evaluating the correction result of the projected picture based on the four included angles includes the following method steps shown in FIG. 8.

In S2071, successful correction is indicated when the values of the four included angles are all zero.

In S2072, correction failure is indicated when the values of the four included angles are not all zero.

When the values of the four included angles are all zero, that is, $\alpha_1 = \alpha_2 = \alpha_3 = \alpha_4 = 0°$, as shown in Part (A) in FIG. 6, Pitch = Yaw = Roll = 0, so the optimal correction effect is achieved, indicating that the correction is completely successful in this case. In addition, due to actual errors, the values of the above four included angles are all zero, and it may also be understood that the values of the four included angles are basically zero. When the values of the four included angles are not exactly zero, their absolute values are closer to zero. Alternatively, the closer the pitch angle, the yaw angle and the roll angle are to zero, the closer the quadrangle obtained by the correction is to the absolute rectangle. For example, the quadrangle with $\alpha_1 = \alpha_2 = \alpha_3 = \alpha_4 = 0001°$ is closer to the absolute rectangle than the quadrangle with $\alpha_1 = \alpha_2 = \alpha_3 = \alpha_4 = 0.002°$, indicating that the correction is also successful in this case.

The values of the above four included angles are not all zero, indicating that one, two, or three of them are zero or none of them is zero, and the correction fails in this case. It should be noted that the values of the four included angles here are not all zero, including the values of the four included angles being not basically zero. When at least one of the values of the four included angles is obviously not zero, it indicates that the quadrangle is distorted and needs to be re-corrected.

In some embodiments, when referring to that the values of the four included angles are basically zero, it may be understood as a preset range value near zero. For example, the value within a range of (-0.01, +0.01) is understood to be basically equal to zero, otherwise, it is basically not equal to zero.

In some embodiments, as shown in FIG. 6, correction failure is indicated when the values of the four included angles are not all zero, including a plurality of embodiments as follows:

indicating correction failure in response to the quadrangle being an irregular quadrangle when none of the values of the four included angles is zero and the values of the four included angles are not equal to each other, as shown in Part (B) in FIG. 6; or

indicating correction failure in response to the quadrangle being a trapezoid with a wider top and a narrower bottom in the case of $\alpha_1 = \alpha_3 = 0, \alpha_2 < 0, \alpha_4 > 0, |\alpha_2| = |\alpha_4|$, as shown in Part (C) in FIG. 6; or

indicating correction failure in response to the quadrangle being a trapezoid with a narrower top and a wider bottom in the case of $\alpha_1 = \alpha_3 = 0, \alpha_2 > 0, \alpha_4 < 0, |\alpha_2| = |\alpha_1|$, as shown in Part (D) in FIG. 6; or

indicating correction failure in response to the quadrangle being a trapezoid with a wider left side and a narrower right side in the case of $\alpha_2 = \alpha_4 = 0, \alpha_1 < 0, \alpha_3 > 0, |\alpha_1| = |\alpha_3|$, as shown in Part (E) in FIG. 6; or

indicating correction failure in response to the quadrangle being a trapezoid with a wider right side and a narrower left side in the case of $\alpha_2 = \alpha_4 = 0, \alpha_1 > 0, \alpha_3 < 0, |\alpha_1| = |\alpha_3|$, as shown in Part (F) in FIG. 6; or

indicating correction failure in response to the quadrangle being a rectangle that rotates counterclockwise in the case of $\alpha_1 = \alpha_2 = \alpha_3 = \alpha_4 > 0$, as shown in Part (G) in FIG. 6; or

indicating correction failure in response to the quadrangle being a rectangle that rotates clockwise in the case of $\alpha_1 = \alpha_2 = \alpha_3 = \alpha_4 < 0$, as shown in Part (H) in FIG. 6.

In related technical solutions, whether the picture is a rectangle can be determined only by means of a shot picture, and their essence is to determine whether the projected image is a rectangle by means of four sides or four vertex points of the picture. However, whether the projected picture is a horizontal absolute rectangle cannot be identified, as shown in Part (G) and Part (H) in FIG. 6. Whether the projected picture is a horizontal standard rectangle can be determined conveniently by means of parameters of the four included angles $\alpha_1, \alpha_2, \alpha_3, \alpha_4$ by using the determination method in this embodiment of the present disclosure.

According to the determination method in this embodiment of the present disclosure, by analyzing the deviation size and/or positive and negative values of each angle in the trapezoidal correction, the main error sources of the trapezoidal correction algorithm can be reversely located quickly. By calculating magnitudes and/or directions of correction parameter (Pitch, Yaw, Roll) errors in the trapezoidal correction, the problems existing in the trapezoidal correction algorithm can be quickly located, and the direction of picture distortion correction can be clarified. This evaluation solution does not use too many evaluation parameters, thereby enabling the evaluation process to be more concise and the evaluation results to be more readable, facilitating the comparison of the advantages and disadvantages of various distortion correction methods, and clarifying the improvement direction of distortion correction methods.

In other embodiments, in S207, the evaluating the correction result of the projected picture based on the values of the four included angles includes the following method steps as shown in FIG. 9.

In S2073, an arithmetic mean of the four included angles $\alpha_1, \alpha_2, \alpha_3, \alpha_4$ is calculated.

In S2074, a calibration error and/or direction of a roll angle of the projected picture is evaluated based on the arithmetic mean.

In S2073, an arithmetic mean of the four included angles $\alpha_1, \alpha_2, \alpha_3, \alpha_4$ is calculated, which satisfies the following relationship:

$$Mean = (\alpha_1 + \alpha_2 + \alpha_3 + \alpha_4)/4 \quad ,$$

wherein i=1, 2, 3, 4.

The four included angles $\alpha_1, \alpha_2, \alpha_3, \alpha_4$ here may be positive values, negative values or zero.

In S2074, the following embodiments may be included: the greater the arithmetic mean, the greater the calibration error of the roll angle; and/or, the roll angle has a positive deviation when the arithmetic means is greater than zero; and/or, the roll angle has a negative deviation when the arithmetic means is less than zero.

The arithmetic means of four angles $\alpha_1, \alpha_2, \alpha_3, \alpha_4$ reflect a calibration error and/or direction of the Roll angle, wherein the greater the mean, the greater calibration error of the Roll angle. The Roll angle has a positive deviation when the mean is greater than zero; and the Roll angle has a negative deviation when the mean is less than zero. According to the determination method in this embodiment, by analyzing the calibration error and/or direction of the Roll angle in the trapezoidal correction, the main error sources of the trapezoidal correction algorithm can be reversely located quickly, and the problems existing in the trapezoidal correction algorithm can be quickly located, such that the direction of picture distortion correction can be clarified. The determination method in this embodiment proposes a more comprehensive and concise trapezoidal correction evaluation standard. Only through the arithmetic mean can the problem in terms of the Roll angle be evaluated, which makes up for the problem of partial evaluation of the trapezoidal correction in the related evaluation solutions in related technologies. The determination method in this embodiment establishes a qualitative and quantitative relationship between the evaluation parameters and the trapezoidal correction parameters, and this relationship can assist in quickly locating the problems existing in the trapezoidal correction.

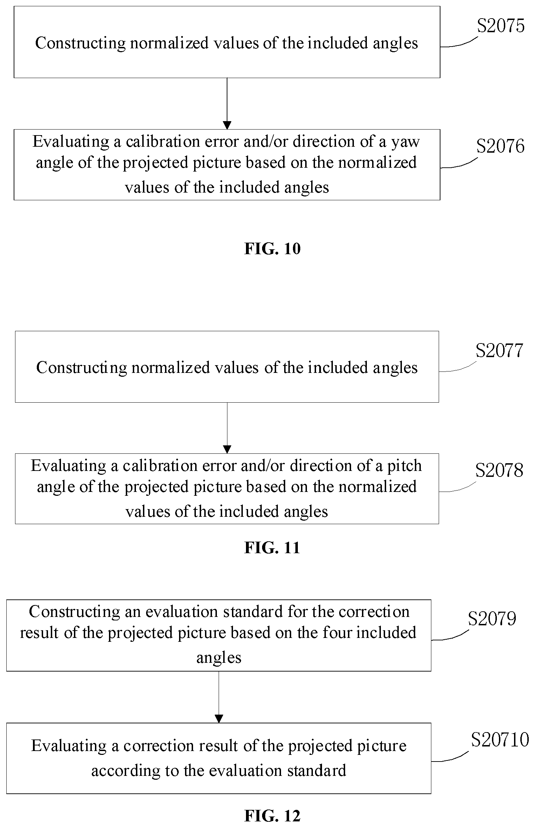

In other embodiments, in S207, the evaluating the correction result of the projected picture based on the values of the four included angles includes the following method steps, as shown in FIG. 10.

In S2075, normalized values of the included angles $\alpha_1, \alpha_3$ are constructed.

In S2076, a calibration error and/or direction of the yaw angle of the projected picture is evaluated based on the normalized values of the included angles $\alpha_1, \alpha_3$.

In S2076, the following embodiments may be included: the greater the absolute angles of the included angles $\alpha_1$,

$\alpha_3$, the greater the calibration error of the yaw angle; and/or, the yaw angle has a positive deviation in the case of $\alpha_1 < \alpha_3$; and/or, the yaw angle has a negative deviation in the case of $\alpha_1 > \alpha_3$.

The normalized values of $\alpha_1,\alpha_3$ reflect the calibration error and/or direction of the Yaw angle, wherein the greater the absolute values of $\alpha_1,\alpha_3$, the greater the calibration deviation of the Yaw angle; the Yaw angle has a positive deviation in the case of $\alpha_1 < \alpha_3$; and the Yaw angle has a negative deviation in the case of $\alpha_1 > \alpha_3$. According to the determination method in this embodiment, by analyzing the calibration error and/or direction of the Yaw angle in the trapezoidal correction, the main error sources of the trapezoidal correction algorithm can be reversely located quickly, and the problems existing in the trapezoidal correction algorithm can be quickly located, such that the direction of picture distortion correction can be clarified. The determination method in this embodiment proposes a more comprehensive and concise trapezoidal correction evaluation standard. Only through the normalized values of $\alpha_1,\alpha_3$ can the problem in terms of the Yaw angle be evaluated, which makes up for the problem of partial evaluation of the trapezoidal correction in the related evaluation solutions in related technologies. The determination method in this embodiment establishes a qualitative and quantitative relationship between the evaluation parameters and the trapezoidal correction parameters, and this relationship can assist in quickly identifying the problems existing in the trapezoidal correction.

In other embodiments, in S207, the evaluating the correction result of the projected picture based on the values of the four included angles includes the following method steps, as shown in FIG. 11.

In S2077, normalized values of the included angles $\alpha_2,\alpha_4$ are constructed.

In S2078, a calibration error and/or direction of the pitch angle of the projected picture are/is evaluated based on the normalized values of the included angles $\alpha_2,\alpha_4$.

In S2078, the following embodiments may be included: the greater the absolute angles of the included angles $\alpha_2$, $\alpha_4$, the greater the calibration error of the pitch angle; and/or, the pitch angle has a positive deviation in the case of $\alpha_2 > \alpha_4$; and/or, the pitch angle has a negative deviation in the case of $\alpha_2 < \alpha_4$.

The normalized values of $\alpha_2,\alpha_4$ reflect the calibration error and/or direction of the Pitch angle, wherein the greater the absolute values of the two values, the greater the calibration deviation of the Pitch angle; the Pitch angle has a positive deviation in the case of $\alpha_2 > \alpha_4$; and the Pitch angle has a negative deviation in the case of $\alpha_2 < \alpha_4$. According to the determination method in this embodiment, by analyzing the calibration error and/or direction of the Pitch angle in the trapezoidal correction, the main error sources of the trapezoidal correction algorithm can be reversely located quickly, and the problems existing in the trapezoidal correction algorithm can be quickly located, such that the direction of picture distortion correction can be clarified. The determination method in this embodiment proposes a more comprehensive and concise trapezoidal correction evaluation standard. Only through the normalized values of $\alpha_2,\alpha_4$ can the problem in terms of the Pitch angle be evaluated, which makes up for the problem of partial evaluation of the trapezoidal correction in the related evaluation solutions in related technologies. The determination method in this embodiment establishes a qualitative and quantitative relationship between the evaluation parameters and the trapezoidal correction parameters, and this relationship can assist in quickly identifying the problems existing in the trapezoidal correction.

In some embodiments, the normalized values $\bar{\alpha}_1,\bar{\alpha}_2,\bar{\alpha}_3,\bar{\alpha}_4$ of the $\alpha_1,\alpha_2,\alpha_3,\alpha_4$ satisfy the following relationship:

$$\bar{\alpha}_i = \alpha_i - Mean,$$

$$Mean = (\alpha_1 + \alpha_2 + \alpha_3 + \alpha_4)/4$$, wherein i=1, 2, 3, 4.

The normalization process is simple, and the problem of inconvenient evaluation caused by excessively large or small values of the four included angles $\alpha_1,\alpha_2,\alpha_3,\alpha_4$ can be quickly adjusted, which makes the above qualitative or quantitative calculation and evaluating method convenient.

In other embodiments, in S207, the evaluating the correction result of the projected picture based on the values of the four included angles includes the following method steps, as shown in FIG. 12.

In S2079, an evaluation standard for the correction result of the projected picture is constructed based on the four included angles $\alpha_1,\alpha_2,\alpha_3,\alpha_4$.

In S20710, the correction result of the projected picture is evaluated according to the evaluation standard.

In S2079, the evaluation standard E satisfies the following relationship:

$$E = PitchErr + YawErr + Mean,$$

in which

$$PitchErr = \frac{|\alpha_2 - Mean| + |\alpha_4 - Mean|}{2}$$

$$YawErr = \frac{|\alpha_1 - Mean| + |\alpha_3 - Mean|}{2}$$

$$RollErr = |Mean|$$

$$Mean = (\alpha_1 + \alpha_2 + \alpha_3 + \alpha_4)/4$$

Here, PitchEr represents an error factor of the Pitch angle, YawErr represents an error factor of the Yaw angle, and RollErr represents an error factor of the Roll angle. Various error factors collectively reflect error states of the current projected picture.

In some embodiments, in S20710, the evaluating the correction result of the projected picture according to the evaluation standard includes: calculating an E value corresponding to the current projected picture according to the evaluation standard, wherein the smaller the calculated E value, the closer the quadrangle of the projected picture is to the absolute rectangle; and the greater the calculated E value, the more different the quadrangle of the projected picture is from the absolute rectangle. Therefore, when evaluating the correction state, the E value of the projected picture obtained from the current correction result calculated according to the evaluation standard should be as small as possible. For example, the corrected projected picture is an absolute rectangle when E is 0.

This embodiment proposes a more comprehensive and concise trapezoidal correction evaluation standard E, which can evaluate both the rectangularity and the levelness, i.e., not only determine whether the correction result is a rectangle, but also determine whether the correction result is a horizontal absolute rectangle, thereby making up for the problem of partial evaluation of the trapezoidal correction in the related evaluation solutions. In this embodiment, a qualitative and quantitative relationship between the evaluation parameters and the trapezoidal correction parameters is also established. This relationship can assist in quickly identifying problems existing in the trapezoidal correction. This embodiment also proposes the evaluation standard E for the trapezoidal calibration algorithm, wherein the advantages and disadvantages of the trapezoidal calibration algorithm can be evaluated directly by using one parameter (evaluation parameter E), thereby greatly facilitating the development and optimization of the trapezoidal correction algorithm. The evaluation process is more concise, and the evaluation results are more readable.

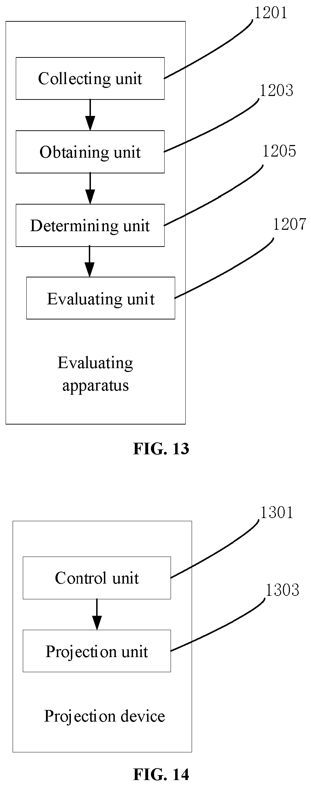

An embodiment of the present disclosure further provides an evaluating apparatus for a distortion correction result of a projected picture, and the evaluating apparatus is used for implementing the evaluating method described in the above embodiments. The same features achieve the same technical effects, which will not be repeatedly described herein. As shown in FIG. 13, the evaluating apparatus includes:

a collecting unit 1201, configured to obtain angle point coordinates of the projected picture, wherein the projected picture is a quadrangle, and the angle point coordinates are coordinates corresponding to four angle points of the quadrangle in a Cartesian coordinate system;
an obtaining unit 1203, configured to obtain four included angles between four sides of the projected picture and corresponding sides of an absolute rectangle, wherein the absolute rectangle refers to a rectangle where one group of opposite sides among the four sides of the rectangle are parallel to an X axis in the Cartesian coordinate system, the other group of opposite sides thereof are parallel to a Y axis in the Cartesian coordinate system, the X axis is in a horizontal direction, and the Y axis is in a vertical direction;
a determining unit 1205, configured to determine values of the four included angles based on the angle point coordinates; and
an evaluating unit 1207, configured to evaluate a correction result of the projected picture based on the values of the four included angles.

In some embodiments, the values of the four included angles are denoted as $\alpha_1, \alpha_2, \alpha_3, \alpha_4$, respectively, wherein $\alpha_1, \alpha_3$ are included angles between two opposite sides in the quadrangle and the horizontal direction, $\alpha_2, \alpha_4$ are included angles between the other two opposite sides in the quadrangle and the vertical direction, and the four included angles satisfy the following relationship:

$$\alpha_1, \alpha_2, \alpha_3, \alpha_4 \in \left( -\frac{\pi}{2}, \frac{\pi}{2} \right).$$

In some embodiments, the evaluating unit 1207 is further configured to indicate successful correction when the values of the four included angles are all zero; and indicate correction failure when the values of the four included angles are not all zero.

In some embodiments, the evaluating unit 1207 is further configured to: indicate correction failure in response to the quadrangle being an irregular quadrangle when none of the values of the four included angles is zero and the values of the four included angles are not equal to each other; or indicate correction failure in response to the quadrangle being a trapezoid with a wider top and a narrower bottom in the case of $\alpha_1 = \alpha_3 = 0, \alpha_2 < 0, \alpha_4 > 0, |\alpha_2| = |\alpha_4|$; or indicate correction failure in response to the quadrangle being a trapezoid with a narrower top and a wider bottom in the case of $\alpha_1 = \alpha_3 = 0, \alpha_2 > 0, \alpha_4 < 0, |\alpha_2| = |\alpha_4|$; or indicate correction failure in response to the quadrangle being a trapezoid with a wider left side and a narrower right side in the case of $\alpha_2 = \alpha_4 = 0, \alpha_1 < 0, \alpha_3 > 0, |\alpha_1| = |\alpha_3|$; or indicate correction failure in response to the quadrangle being a trapezoid with a wider right side and a narrower left side in the case of $\alpha_2 = \alpha_4 = 0, \alpha_1 > 0, \alpha_3 < 0, |\alpha_1| = |\alpha_3|$; or indicate correction failure in response to the quadrangle being a rectangle that rotates counterclockwise in the case of $\alpha_1 = \alpha_2 = \alpha_3 = \alpha_4 > 0$; or indicate correction failure in response to the quadrangle being a rectangle that rotates clockwise in the case of $\alpha_1 = \alpha_2 = \alpha_3 = \alpha_4 < 0$.

In some embodiments, the evaluating unit 1207 is further configured to calculate an arithmetic mean of the four included angles $\alpha_1, \alpha_2, \alpha_3, \alpha_4$; and evaluate a calibration error and/or direction of a roll angle of the projected picture based on the arithmetic mean.

In some embodiments, the evaluating unit 1207 is further configured to indicate that: the greater the arithmetic mean, the greater the calibration error of the roll angle; and/or, the roll angle has a positive deviation when the arithmetic means is greater than zero; and/or, the roll angle has a negative deviation when the arithmetic means is less than zero.

In some embodiments, the evaluating unit 1207 is further configured to construct normalized values of the included angles $\alpha_1, \alpha_3$; and evaluate a calibration error and/or direction of a yaw angle of the projected picture based on the normalized values of the included angle $\alpha_1, \alpha_3$.

In some embodiments, the evaluating unit 1207 is further configured to indicate that: the greater the absolute angles of the included angles $\alpha_1, \alpha_3$, the greater the calibration error of the yaw angle; and/or, the yaw angle has a positive deviation in response to $\alpha_1 < \alpha_3$; and/or, the yaw angle has a negative deviation in response to $\alpha_1 > \alpha_3$.

In some embodiments, the evaluating unit 1207 is further configured to construct normalized values of the included angles $\alpha_2, \alpha_4$; and evaluate a calibration error and/or direction of a pitch angle of the projected picture based on the normalized values of the included angles $\alpha_2, \alpha_4$.

In some embodiments, the evaluating unit 1207 is further configured to indicate: the greater the absolute angles of the included angles $\alpha_2, \alpha_4$, the greater the calibration error of the pitch angle; and/or, the pitch angle has a positive deviation in response to $\alpha_2 > \alpha_4$; and/or, the pitch angle has a negative deviation in response to $\alpha_2 < \alpha_4$.

In some embodiments, the normalized values $\bar{\alpha}_1, \bar{\alpha}_2, \bar{\alpha}_3, \bar{\alpha}_4$ of the $\alpha_1, \alpha_2, \alpha_3, \alpha_4$ satisfy the following relationship:

$$\bar{\alpha}_i = \alpha_i - Mean,$$
$$Mean = (\alpha_1 + \alpha_2 + \alpha_3 + \alpha_4) / 4, \text{ wherein i=1, 2, 3, 4.}$$

In some embodiments, the evaluating unit 1207 is further configured to construct an evaluation standard for the correction result of the projected picture based on the four included angles $\alpha_1, \alpha_2, \alpha_3, \alpha_4$; and evaluate the correction result of the projected picture according to the evaluation standard.

In some embodiments, the evaluating unit is further configured to: enable the evaluation standard E to satisfy the following relationship: E = *PitchErr* + *YawErr* + *Mean*, wherein

$$PitchErr = \frac{|\alpha_2 - Mean| + |\alpha_4 - Mean|}{2}$$

$$YawErr = \frac{|\alpha_1 - Mean| + |\alpha_3 - Mean|}{2}$$

$$RollErr = \left| Mean \right|$$

$$Mean = \left( \alpha_1 + \alpha_2 + \alpha_3 + \alpha_4 \right) / 4$$

In some embodiments, the evaluating unit 1207 is further configured to indicate that: the smaller the calculated E value, the closer the quadrangle of the projected picture is to the absolute rectangle; and the greater the calculated E value, the more different the quadrangle of the projected picture is from the absolute rectangle.

In some embodiments, the collecting unit 1201 is further configured to: collect any projected picture randomly; determine positions of four angle points P1, P2, P3, and P4 of the projected picture in a Cartesian coordinate system; and obtain coordinates of the four angle points P1, P2, P3, and P4, denoted as $P1(P1_X, P1_Y)$, $P2(P2_X, P2_Y)$, $P3(P3_X, P3_Y)$, and $P4(P4_X, P4_Y)$.

In some embodiments, the four included angles $\alpha_1, \alpha_2, \alpha_3, \alpha_4$ satisfy the following relationship:

$$\alpha_1 = \arctan\left( \frac{P2_y - P1_y}{P2_x - P1_x} \right)$$

$$\alpha_2 = \arctan\left( \frac{P3_x - P2_x}{P2_y - P3_y} \right)$$

$$\alpha_3 = \arctan\left( \frac{P4_y - P3_y}{P4_x - P3_x} \right)$$

$$\alpha_4 = \arctan\left( \frac{P4_x - P1_x}{P1_y - P4_y} \right),$$

wherein the $P1_x$, $P1_y$, $P2_x$, $P2_y$, $P3_x$, $P3_y$, $P4_x$, and P4y represent angle point coordinate values of the four angle points P1, P2, P3, and P4 of the quadrangle, respectively.

An embodiment of the present disclosure further provides a projection device. As shown in FIG. 14, the projection device includes a control unit 1301 and a projection unit 1303, wherein the control unit 1301 is configured to control the projection unit 1303 to execute a projection instruction, and evaluate a distortion correction result of a projected picture through the steps of any of the above methods.

An embodiment of the present disclosure further provides a projection device. The projection device includes a control unit and any of the above evaluating apparatuses, wherein the control unit is configured to control the evaluating apparatus to evaluate a distortion correction result of a projected picture.

An embodiment of the present disclosure further provides an electronic device. The electronic device includes a processor and a memory, wherein the memory stores computer program instructions executable by the processor, and the processor, when executing the computer program instructions, implements the steps of any of the above methods.

An embodiment of the present disclosure further provides a non-transient computer-readable storage medium storing computer program instructions therein, wherein when the computer program instructions are invoked and executed by a processor, the steps of any of the above methods are implemented.

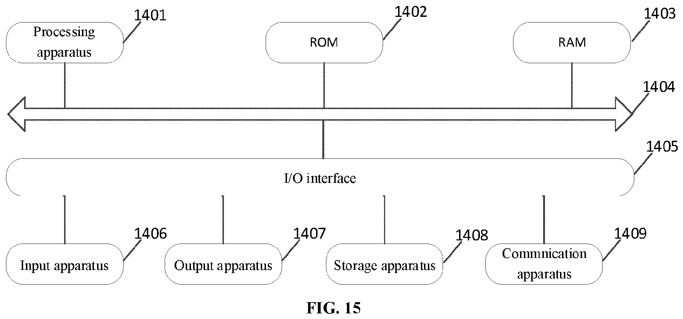

As shown in FIG. 15, the electronic device may include a processing apparatus (e.g., a central processing unit, or a graphics processing unit) 1401, which may perform various appropriate actions and processing according to a program stored in a read-only memory (ROM) 1402 or a program that is loaded into a random access memory (RAM) 1403 from a storage apparatus 1408. The RAM 1403 further stores various programs and data required for the operations of a projection device. The processing apparatus 1401, the ROM 1402 and the RAM 1403 are connected to each other via a bus 1404. The input/output (I/O) interface 1405 is also connected to the bus 1404.

Typically, the following apparatuses may be connected to the I/O interface 1405: an input apparatus 1406 including a touch screen, a touchpad, a camera, a microphone, an accelerometer, a gyroscope, etc.; an output apparatus 1407 including a liquid crystal display (LCD), a speaker, a vibrator, etc.; a storage apparatus 1408 including a hard disk, etc.; and a communication apparatus 1409. The communication apparatus 1409 may allow the electronic device and other devices to communicate in a wireless or wired manner to exchange data. Although FIG. 15 shows the electronic device equipped with various apparatuses, it should be understood that not all the apparatuses shown need to be implemented or equipped. More or fewer apparatuses may be implemented or equipped alternatively.

The flowchart and block diagram in the accompanying drawings illustrate the system architecture, functions and operations of the system, method and computer program product that may be implemented in accordance with various embodiments of the present disclosure. At this point, each block in the flowchart or block diagram may represent a module, a program segment, or part of code, wherein the module, program segment, or part of code contains one or more executable instructions for implementing a specified logical function. It should also be noted that in some alternative implementations, the functions indicated in the blocks may also occur in a different order than those indicated in the drawings. For example, two blocks represented consecutively may actually be performed substantially in parallel, and they may sometimes be performed in a reverse order, depending on the functionality involved. It should also be noted that each block in the block diagram and/or flowchart, and the combination of blocks in the block diagram and/or flowchart, may be implemented by a dedicated hardware-based system for performing a specified function or operation, or may be implemented by a combination of dedicated hardware and computer instructions.

Finally, it should be noted that various embodiments in the Description are described in a progressive manner, each embodiment focuses on the differences from other embodiments, and the same or similar parts among the various embodiments may refer to one another. Since the system or device disclosed in the embodiment corresponds to the method disclosed in the embodiment, the description of the system or device is relatively simple, and the relevant parts may refer to the description of the method part.

The above embodiments are only used to illustrate the technical solutions of the present disclosure and are not intended to limit the present disclosure. Although the present disclosure has been described in detail with reference to the foregoing embodiments, those of ordinary skills in the art should understand that, they can still make modifications to the technical solutions described in the foregoing embodiments or make equivalent substitutions to some of the technical features; and these modifications or substitutions do not make the essence of the corresponding technical solutions deviate from the spirit and scope of the technical solutions of the various embodiments of the present disclosure.

**Claims**

1. An evaluating method for a distortion correction result of a projected picture, comprising:

   obtaining angle point coordinates of the projected picture, wherein the projected picture is a quadrangle, and the angle point coordinates are coordinates corresponding to four angle points of the quadrangle in a Cartesian coordinate system;
   obtaining four included angles between four sides of the projected picture and corresponding sides of an absolute rectangle, wherein one group of opposite sides among the four sides of the absolute rectangle are parallel to an X axis in the Cartesian coordinate system, the other group of opposite sides among the four sides of the absolute rectangle are parallel to a Y axis in the Cartesian coordinate system, the X axis is in a horizontal direction, and the Y axis is in a vertical direction;
   determining values of the four included angles based on the angle point coordinates; and
   evaluating a correction result of the projected picture based on the values of the four included angles.

2. The evaluating method according to claim 1, wherein the values of the four included angles are denoted as $\alpha_1, \alpha_2, \alpha_3, \alpha_4$, respectively, wherein $\alpha_1, \alpha_3$ are included angles between two opposite sides in the quadrangle and the horizontal direction, $\alpha_2, \alpha_4$ are included angles between the other two opposite sides in the quadrangle and the vertical direction, and the four included angles satisfy the following relationship:

$$\alpha_1, \alpha_2, \alpha_3, \alpha_4 \in \left( -\frac{\pi}{2}, \frac{\pi}{2} \right)$$

3. The evaluating method according to claim 1, wherein the evaluating the correction result of the projected picture based on the values of the four included angles comprises:
   indicating successful correction when the values of the four included angles are all zero; and indicating correction failure when the values of the four included angles are not all zero.

4. The evaluating method according to claim 3, wherein the indicating correction failure when the values of the four included angles are not all zero comprises:

indicating correction failure in response to the quadrangle being an irregular quadrangle when none of the values of the four included angles is zero and the values of the four included angles are not equal to each other; or indicating correction failure in response to the quadrangle being a trapezoid with a wider top and a narrower bottom in a case of $\alpha_1 = \alpha_3 = 0, \alpha_2 < 0, \alpha_4 > 0, |\alpha_1| = |\alpha_4|$; or indicating correction failure in response to the quadrangle being a trapezoid with a narrower top and a wider bottom in a case of $\alpha_1 = \alpha_3 = 0, \alpha_2 > 0, \alpha_4 < 0, |\alpha_2| = |\alpha_4|$; or indicating correction failure in response to the quadrangle being a trapezoid with a wider left side and a narrower right side in a case of $\alpha_2 = \alpha_4 = 0, \alpha_1 < 0, \alpha_3 > 0, |\alpha_1| = |\alpha_3|$; or indicating correction failure in response to the quadrangle being a trapezoid with a wider right side and a narrower left side in a case of $\alpha_2 = \alpha_4 = 0, \alpha_1 > 0, \alpha_3 < 0, |\alpha_1| = |\alpha_3|$; or indicating correction failure in response to the quadrangle being a rectangle that rotates counterclockwise in a case of $\alpha_1 = \alpha_2 = \alpha_3 = \alpha_4 > 0$; or indicating correction failure in response to the quadrangle being a rectangle that rotates clockwise in a case of $\alpha_1 = \alpha_2 = \alpha_3 = \alpha_4 < 0$.

5. The evaluating method according to claim 1, wherein the evaluating the correction result of the projected picture based on the values of the four included angles comprises:

calculating an arithmetic mean of the four included angles; and evaluating a calibration error and/or direction of a roll angle of the projected picture based on the arithmetic mean.

6. The evaluating method according to claim 5, wherein the evaluating the calibration error and/or direction of the roll angle of the projected picture based on the arithmetic mean comprises:

indicating that the greater the arithmetic mean, the greater the calibration error of the roll angle; and/or, indicating that the roll angle has a positive deviation when the arithmetic mean is greater than zero; and/or, indicating that the roll angle has a negative deviation when the arithmetic mean is less than zero.

7. The evaluating method according to claim 2, wherein the evaluating the correction result of the projected picture based on the values of the four included angles comprises:

constructing normalized values of the included angles $\alpha_1, \alpha_3$; and evaluating a calibration error and/or direction of a yaw angle of the projected picture based on the normalized values of the included angles $\alpha_1, \alpha_3$.

8. The evaluating method according to claim 2, wherein the evaluating the correction result of the projected picture based on the values of the four included angles comprises:

indicating that the greater absolute values of the included angles $\alpha_1, \alpha_3$, the greater the calibration error of the yaw angle; and/or, indicating that the yaw angle has a positive deviation in a case of $\alpha_1 < \alpha_3$; and/or, indicating that the yaw angle has a negative deviation in a case of $\alpha_1 > \alpha_3$.

9. The evaluating method according to claim 2, wherein the evaluating the correction result of the projected picture based on the values of the four included angles comprises:

constructing normalized values of the included angles $\alpha_2, \alpha_4$; and evaluating a calibration error and/or direction of a pitch angle of the projected picture based on the normalized values of the included angles $\alpha_2, \alpha_4$.

10. The evaluating method according to claim 2, wherein the evaluating the correction result of the projected picture based on the values of the four included angles comprises:

indicating that the greater absolute values of the included angles $\alpha_2, \alpha_4$, the greater the calibration error of the pitch angle; and/or,

indicating that the pitch angle has a positive deviation in a case of $\alpha_2 > \alpha_4$; and/or,
indicating that the pitch angle has a negative deviation in a case of $\alpha_2 < \alpha_4$.

11. The method according to claim 7 or 9, wherein the normalized values $\overline{\alpha}_1, \overline{\alpha}_2, \overline{\alpha}_3, \overline{\alpha}_4$ of the $\alpha_1, \alpha_2, \alpha_3, \alpha_4$ satisfy the following relationship:

$$\overline{\alpha}_i = \alpha_i - Mean,$$

$$Mean = (\alpha_1 + \alpha_2 + \alpha_3 + \alpha_4)/4$$

wherein i=1, 2, 3, 4.

12. The evaluating method according to claim 2, wherein the evaluating the correction result of the projected picture based on the values of the four included angles comprises:

constructing an evaluation standard for the correction result of the projected picture based on the four included angles $\alpha_1, \alpha_2, \alpha_3, \alpha_4$; and
evaluating the correction result of the projected picture according to the evaluation standard.

13. The evaluating method according to claim 12, wherein the constructing the evaluation standard for the correction result of the projected picture based on the four included angles $\alpha_1, \alpha_2, \alpha_3, \alpha_4$ comprises:
enabling the evaluation standard E to satisfy the following relationship:

$$E = PitchErr + YawErr + Mean,$$

wherein

$$PitchErr = \frac{|\alpha_2 - Mean| + |\alpha_4 - Mean|}{2}$$

$$YawErr = \frac{|\alpha_1 - Mean| + |\alpha_3 - Mean|}{2}$$

$$RollErr = |Mean|$$

$$Mean = (\alpha_1 + \alpha_2 + \alpha_3 + \alpha_4)/4.$$

14. The evaluating method according to claim 13, wherein the evaluating the correction result of the projected picture according to the evaluation standard comprises:
calculating an E value corresponding to a current projected picture according to the evaluation standard, wherein the smaller the calculated E value, the closer the quadrangle of the projected picture is to the absolute rectangle; and the greater the calculated E value, the more different the quadrangle of the projected picture is from the absolute rectangle.

15. The evaluating method according to claim 1, wherein the obtaining angle point coordinates of the projected picture comprises:

collecting any projected picture randomly; and
determining positions of four angle points P1, P2, P3, and P4 of the projected picture in the Cartesian coordinate system, and obtaining coordinates of the four angle points P1, P2, P3, and P4, denoted as P1($P1_X$, $P1_Y$), P2($P2_X$, $P2_Y$), P3($P3_X$, $P3_Y$), and P4($P4_X$, $P4_Y$).

**16.** The evaluating method according to claim 15, wherein the determining positions of four angle points P1, P2, P3, and P4 of the projected picture in the Cartesian coordinate system, and obtaining coordinates of the four angle points P1, P2, P3, and P4 comprise:

constructing four quadrants of the projected picture in the Cartesian coordinate system, denoted as a first quadrant, a second quadrant, a third quadrant and a fourth quadrant, wherein the four angle points of the quadrangle are located in the four quadrants, respectively;
denoting the four angle points located in the second quadrant, the first quadrant, the fourth quadrant and the third quadrant as P1, P2, P3 and P4, respectively; and
obtaining coordinates of the four angle points P1, P2, P3, and P4.

**17.** The evaluating method according to claim 15, wherein the four included angles $\alpha_1, \alpha_2, \alpha_3, \alpha_4$ satisfy the following relationship:

$$\alpha_1 = \arctan\left(\frac{P2_y - P1_y}{P2_x - P1_x}\right)$$

$$\alpha_2 = \arctan\left(\frac{P3_x - P2_x}{P2_y - P3_y}\right)$$

$$\alpha_3 = \arctan\left(\frac{P4_y - P3_y}{P4_x - P3_x}\right)$$

$$\alpha_4 = \arctan\left(\frac{P4_x - P1_x}{P1_y - P4_y}\right)$$

wherein the $P1_x$, $P1_y$, $P2_x$, $P2_y$, $P3_x$, $P3_y$, $P4_x$, and P4y represent angle point coordinate values of the four angle points P1, P2, P3, and P4 of the quadrangle, respectively.

**18.** An evaluating apparatus for a distortion correction result of a projected picture, comprising:

a collecting unit, configured to obtain angle point coordinates of the projected picture, wherein the projected picture is a quadrangle, and the angle point coordinates are coordinates corresponding to four angle points of the quadrangle in a Cartesian coordinate system;
an obtaining unit, configured to obtain four included angles between four sides of the projected picture and corresponding sides of an absolute rectangle, wherein one group of opposite sides among the four sides of the absolute rectangle are parallel to an X axis in the Cartesian coordinate system, the other group of opposite sides among the four sides of the absolute rectangle are parallel to a Y axis in the Cartesian coordinate system, the X axis is in a horizontal direction, and the Y axis is in a vertical direction;
a determining unit, configured to determine values of the four included angles based on the angle point coordinates; and
an evaluating unit, configured to evaluate a correction result of the projected picture based on the values of the four included angles.

**19.** The evaluating apparatus according to claim 18, wherein the values of the four included angles are denoted as $\alpha_1, \alpha_2, \alpha_3, \alpha_4$, respectively, wherein $\alpha_1, \alpha_3$ are included angles between two opposite sides in the quadrangle and the horizontal direction, $\alpha_2, \alpha_4$ are included angles between the other two opposite sides in the quadrangle and the vertical direction, and the four included angles satisfy the following relationship:

$$\alpha_1, \alpha_2, \alpha_3, \alpha_4 \in \left( -\frac{\pi}{2}, \frac{\pi}{2} \right).$$

**20.** The evaluating apparatus according to claim 18, wherein the evaluating unit is further configured to: indicate successful correction when the values of the four included angles are all zero; and indicate correction failure when the values of the four included angles are not all zero.

**21.** The evaluating apparatus according to claim 20, wherein the evaluating unit is further configured to:

indicate correction failure in response to the quadrangle being an irregular quadrangle when none of the values of the four included angles is zero and the values of the four included angles are not equal to each other; or
indicate correction failure in response to the quadrangle being a trapezoid with a wider top and a narrower bottom in a case of $\alpha_1 = \alpha_3 = 0, \alpha_2 < 0, \alpha_4 > 0, |\alpha_2| = |\alpha_4|$; or
indicate correction failure in response to the quadrangle being a trapezoid with a narrower top and a wider bottom in a case of $\alpha_1 = \alpha_3 = 0, \alpha_2 > 0, \alpha_4 < 0, |\alpha_2| = |\alpha_4|$; or
indicate correction failure in response to the quadrangle being a trapezoid with a wider left side and a narrower right side in a case of $\alpha_2 = \alpha_4 = 0, \alpha_1 < 0, \alpha_3 > 0, |\alpha_1| = |\alpha_3|$; or
indicate correction failure in response to the quadrangle being a trapezoid with a wider right side and a narrower left side in a case of $\alpha_2 = \alpha_4 = 0, \alpha_1 > 0, \alpha_3 < 0, |\alpha_1| = |\alpha_3|$; or
indicate correction failure in response to the quadrangle being a rectangle that rotates counterclockwise in a case of $\alpha_1 = \alpha_2 = \alpha_3 = \alpha_4 > 0$; or
indicate correction failure in response to the quadrangle being a rectangle that rotates clockwise in a case of $\alpha_1 = \alpha_2 = \alpha_3 = \alpha_4 < 0$.

**22.** The evaluating apparatus according to claim 18, wherein the evaluating unit is further configured to:

calculate an arithmetic mean of the four included angles; and
evaluate a calibration error and/or direction of a roll angle of the projected picture based on the arithmetic mean.

**23.** The evaluating apparatus according to claim 22, wherein the evaluating unit is further configured to:

indicate that the greater the arithmetic mean, the greater the calibration error of the roll angle; and/or,
indicate that the roll angle has a positive deviation when the arithmetic mean is greater than zero; and/or,
indicate that the roll angle has a negative deviation when the arithmetic mean is less than zero.

**24.** The evaluating apparatus according to claim 19, wherein the evaluating unit is further configured to:

construct normalized values of the included angles $\alpha_1, \alpha_3$; and
evaluate a calibration error and/or direction of a yaw angle of the projected picture based on the normalized values of the included angles $\alpha_1, \alpha_3$.

**25.** The evaluating apparatus according to claim 19, wherein the evaluating unit is further configured to:

indicate that the greater the absolute values of the included angles $\alpha_1, \alpha_3$, the greater the calibration error of the yaw angle; and/or,
indicate that the yaw angle has a positive deviation in a case of $\alpha_1 < \alpha_3$; and/or,
indicate that the yaw angle has a negative deviation in a case of $\alpha_1 > \alpha_3$.

**26.** The evaluating apparatus according to claim 19, wherein the evaluating unit is further configured to:

construct normalized values of the included angles $\alpha_2, \alpha_4$; and
evaluate a calibration error and/or direction of a pitch angle of the projected picture based on the normalized values of the included angles $\alpha_2, \alpha_4$.

**27.** The evaluating apparatus according to claim 19, wherein the evaluating unit is further configured to:

indicate that the greater the absolute values of the included angles $\alpha_2, \alpha_4$, the greater the calibration error of the pitch angle; and/or,
indicate that the pitch angle has a positive deviation in a case of $\alpha_2 > \alpha_4$; and/or,
indicate that the pitch angle has a negative deviation in a case of $\alpha_2 < \alpha_4$.

28. The evaluating apparatus according to claim 24 or 26, wherein the normalized values $\overline{\alpha}_1, \overline{\alpha}_2, \overline{\alpha}_3, \overline{\alpha}_1$ of the $\alpha_1, \alpha_2, \alpha_3, \alpha_4$ satisfy the following relationship:

$$\overline{\alpha}_i = \alpha_i - Mean,$$

$$Mean = (\alpha_1 + \alpha_2 + \alpha_3 + \alpha_4) / 4$$

wherein i=1, 2, 3, 4.

29. The evaluating apparatus according to claim 19, wherein the evaluating unit is further configured to:

construct an evaluation standard for the correction result of the projected picture based on the four included angles $\alpha_1, \alpha_2, \alpha_3, \alpha_4$; and
evaluate the correction result of the projected picture according to the evaluation standard.

30. The evaluating apparatus according to claim 29, wherein the evaluating unit is further configured to:
enable the evaluation standard E to satisfy the following relationship:

$$E = PitchErr + YawErr + Mean,$$

$$PitchErr = \frac{|\alpha_2 - Mean| + |\alpha_4 - Mean|}{2}$$

$$YawErr = \frac{|\alpha_1 - Mean| + |\alpha_3 - Mean|}{2}$$

$$RollErr = |Mean|$$

$$Mean = (\alpha_1 + \alpha_2 + \alpha_3 + \alpha_4) / 4$$

31. The evaluating apparatus according to claim 30, wherein the evaluating unit is further configured to:
calculate an E value corresponding to a current projected picture according to the evaluation, wherein the smaller the calculated E value, the closer the quadrangle of the projected picture is to the absolute rectangle; and the greater the calculated E value, the more different the quadrangle of the projected picture is from the absolute rectangle.

32. The evaluating apparatus according to claim 18, the collecting unit is further configured to:

collect any projected picture randomly; and
determine positions of four angle points P1, P2, P3, and P4 of the projected picture in the Cartesian coordinate system, and obtain coordinates of the four angle points P1, P2, P3, and P4, denoted as P1(P1$_X$, P1$_Y$), P2(P2$_X$, P2$_Y$), P3(P3$_X$, P3$_Y$), and P4(P4$_X$, P4$_Y$).

33. The evaluating apparatus according to claim 32, the collecting unit is further configured to:

construct four quadrants of the projected picture in the Cartesian coordinate system, denoted as a first quadrant, a second quadrant, a third quadrant and a fourth quadrant, wherein the four angle points of the quadrangle are located in the four quadrants, respectively;
denote the four angle points on the second quadrant, the first quadrant, the fourth quadrant and the third quadrant as P1, P2, P3 and P4, respectively; and
obtain coordinates of the four angle points P1, P2, P3, and P4.

**34.** The evaluating apparatus according to claim 32, wherein the four included angles $\alpha_1, \alpha_2, \alpha_3, \alpha_4$, satisfy the following relationship:

$$\alpha_1 = \arctan\left(\frac{P2_y - P1_y}{P2_x - P1_x}\right)$$

$$\alpha_2 = \arctan\left(\frac{P3_x - P2_x}{P2_y - P3_y}\right)$$

$$\alpha_3 = \arctan\left(\frac{P4_y - P3_y}{P4_x - P3_x}\right)$$

$$\alpha_4 = \arctan\left(\frac{P4_x - P1_x}{P1_y - P4_y}\right)$$

wherein the $P1_x, P1_y, P2_x, P2_y, P3_x, P3_y, P4_x$, and P4y represent angle point coordinate values of the four angle points P1, P2, P3, and P4 of the quadrangle, respectively.

**35.** A projection device, comprising a control unit and a projection unit, wherein the control unit is configured to control the projection unit to execute a projection instruction and evaluate a distortion correction result of a projected picture through the steps of the method according to any one of claims 1 to 17.

**36.** A projection device, comprising a control unit and the evaluating apparatus according to any one of claims 18 to 34, wherein the control unit is configured to control the evaluating apparatus to evaluate a distortion correction result of the projected picture.

**37.** An electronic device, comprising a processor and a memory, wherein the memory stores computer program instructions executable by the processor, and the processor, when executing the computer program instructions, implements the steps of the method according to any one of claims 1 to 17.

**38.** A non-transient computer-readable storage medium storing computer program instructions therein, wherein when the computer program instructions are invoked and executed by a processor, the steps of the method according to any one of claims 1 to 17 are implemented.

**FIG. 1**

| Collecting a projected picture and obtaining angle point coordinates of the projected picture | S201 |

| Obtaining four included angles between four sides of the projected picture and corresponding sides of an absolute horizontal rectangle | S203 |

| Determining values of the four included angles based on the angle point coordinates | S205 |

| Evaluating a correction result of the projected picture based on the values of the four included angles | S207 |

**FIG. 2**

**FIG. 3**

Collecting a projected picture randomly — S2011

Determining positions of four angle points in the projected picture on an XY plane in a Cartesian coordinate system, and obtaining coordinates of the four angle points — S2013

**FIG. 4**

**FIG. 5**

FIG. 6

**FIG. 7**

Indicating successful correction when the values of the four included angles are all zero — S2071

Indicating correction failure when the values of the four included angles are not all zero — S2072

**FIG. 8**

Calculating an arithmetic mean of the four included angles — S2073

Evaluating a calibration error and/or direction of a roll angle of the projected picture based on the arithmetic mean — S2074

**FIG. 9**

Constructing normalized values of the included angles — S2075

Evaluating a calibration error and/or direction of a yaw angle of the projected picture based on the normalized values of the included angles — S2076

**FIG. 10**

Constructing normalized values of the included angles — S2077

Evaluating a calibration error and/or direction of a pitch angle of the projected picture based on the normalized values of the included angles — S2078

**FIG. 11**

Constructing an evaluation standard for the correction result of the projected picture based on the four included angles — S2079

Evaluating a correction result of the projected picture according to the evaluation standard — S20710

**FIG. 12**

1201

Collecting unit

1203

Obtaining unit

1205

Determining unit

1207

Evaluating unit

Evaluating
apparatus

**FIG. 13**

1301

Control unit

1303

Projection unit

Projection device

**FIG. 14**

FIG. 15

## INTERNATIONAL SEARCH REPORT

| International application No. |
| --- |
| **PCT/CN2023/080875** |

### A.  CLASSIFICATION OF SUBJECT MATTER

H04N 9/31(2006.01)i

According to International Patent Classification (IPC) or to both national classification and IPC

### B.  FIELDS SEARCHED

Minimum documentation searched (classification system followed by classification symbols)

IPC:H04N G06T G03B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXTC; CNKI: 参考, 标准, 绝对, 矩形, 四边形, 夹角, 角度, 倾斜, 偏离, 矫正, 校正, 畸变, 畸形, 投影, 程度, 评估, 评价, reference, rectangle, quadrilatera, quadrangle, distortion, projection, included angle, evaluation, correction

### C.  DOCUMENTS CONSIDERED TO BE RELEVANT

| Category* | Citation of document, with indication, where appropriate, of the relevant passages | Relevant to claim No. |
| --- | --- | --- |
| X | CN 114205571 A (SHENZHEN LINYOUTONG TECHNOLOGY DEVELOPMENT CO., LTD.) 18 March 2022 (2022-03-18)<br>description, paragraphs [0005]-[0150] | 1-12, 15-29, 32-38 |
| X | CN 105100792 A (SHANGHAI BE-TIGER NETWORK TECHNOLOGY CO., LTD.) 25 November 2015 (2015-11-25)<br>description, paragraphs [0006]-[0041] | 1-3, 18-20, 35-38 |
| A | CN 102611822 A (HISENSE GROUP) 25 July 2012 (2012-07-25)<br>entire document | 1-38 |
| A | CN 109040724 A (TRULY OPTO-ELECTRONICS LTD.) 18 December 2018 (2018-12-18)<br>entire document | 1-38 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 May 2023** | **15 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/080875**

| Patent document cited in search report | | | Publication date (day/month/year) | Patent family member(s) | Publication date (day/month/year) |
|---|---|---|---|---|---|
| CN | 114205571 | A | 18 March 2022 | None | |
| CN | 105100792 | A | 25 November 2015 | None | |
| CN | 102611822 | A | 25 July 2012 | None | |
| CN | 109040724 | A | 18 December 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210983624